# EUROPEAN PATENT APPLICATION

(11) **EP 2 046 041 A1**
(43) Date of publication of application: **08.04.2009**
(21) Application number: 07291194.4
(22) Date of filing: 02.10.2007
(51) Int. Cl.: H04N 7/24

(54) **Multicast router, distribution system,network and method of a content distribution**

(71) Applicant: Alcatel Lucent, 75008 Paris (FR)
(72) Inventor: Leprovost, Yann, 91620 Nozay (FR); Sayadi, Bessem, 92330 Sceaux (FR)
(74) Representative: Croonenbroek, Thomas Jakob

(57) **Abstract**

The invention relates to a multicast router (8) of a content distribution system and a associated method adapted on the one hand, for receiving from an upper level of a network (1) multiplexed, in scalable video compression encoded, television channel bit-streams (14) and on the other hand, adapted to multicast said multiplexed, in scalable video compression encoded, television channel bit-streams (14) to a lower level of said network (1), comprising:
- a demultiplexer (16) of said multiplexed, in scalable video compression encoded, television channel bit-streams (14) into different in scalable video compression encoded, television channel bit-streams (24),
- encoded video layer extractors (18), able to select with respect to a television channel, different layers of said in scalable video compression encoded, television channel bit-streams (24),
- a statistical multiplexer controller (20) for controlling said encoded video layer extractors (18) to truncate selected layers of associated in scalable video compression encoded, television channel bit-streams (24) obtaining truncated, in scalable video compression encoded, television bit-streams (27), in order to adapt the output bit-rate to the allowable bandwidth (25) of the lower level of the network (1),
- a multiplexer (22) of said truncate, in scalable video compression encoded, television channel bit-streams (27), into multiplexed, in scalable video compression encoded, television channel bit-streams (29).

This invention relates also to a multicast system (31) and a network (1) comprising such a multicast router (8).

## Description

The invention relates to the field of statistical multiplexing and distribution of content, such as digital video or television programs. In one exemplary aspect, the invention relates to improving the performance of a digital fixed, wireless or converged network.

In a conventional digital television network, digital programming is usually collected at a central location, assembled in multiple transport streams and transported to other intermediate locations in the network for further downstream transportation to consumer premises equipment.

The programming may he available at the intermediate location in uncompressed (e.g., analog) or pre-compressed (e.g., MPEG-2 transport stream) format. In the recent years, more and more central locations have begun using statistical multiplexing techniques to efficiently create the centrally aggregated program multiplexes.

As is well known, statistical multiplexing is a technique used to efficiently pack multiple programs within a transport stream. This technique relies on the principle that the instantaneous bandwidth required to transmit a given program fluctuates over time, typically bused on the ease of compression of the video content.

This makes bandwidth-efficient transmission of multiple programs possible as a multiplex by sharing the allocated bit-rate.

Because the bit-rate peaks of separate program streams do not occur simultaneously, a group of programs can share an allocated bit-rate that is smaller than the sum of the bit-rate peaks of the program streams carried.

Furthermore, the bit-rate contribution each individual program stream is typically controlled to provide both a safety factor and even greater efficiencies.

A variety of approaches to statistical multiplexing are in evidence under the prior art.

Statistical multiplexing comprises transmitter, for transmitting a plurality of digital signals through a plurality of channels, including a plurality of encoders each associated with one channel, a multiplexer for receiving the encoded digital signals and for transmitting the encoded signals as a stream of data, and operable for adjusting the distribution of the bit-rate allocation between and among the encoded signals.

While the use of statistical multiplexing is beneficial in many aspects, including for example reduced storage and transportation costs, conventional statistical multiplexing methods for MPEG-1/2 or more recently, for MPEG-4 programs involve high complex transcoding (decoding and re-encoding) processes.

In known networks, using "cascades of hub based statistical multiplexing stages" is suggested.

However, in each node, a re-quantisation step is implemented in order to adapt at every stage of the cascade, the new bit-rate to the target bandwidth, requiring the decoding of the whole media stream and re-encoding with a new constraints in each multicast node in the network.

This results in loss of transmission efficiency and in a cost increase of the solution.

It is an object of the present invention to optimize known networks while broadcast video quality is maintained.

In a first aspect of the present invention, this object is achieved by a multicast router of a content distribution system adapted on the one hand, for receiving from an upper level of a network multiplexed, in scalable video compression encoded, television channel bit-streams and on the other hand, adapted to multicast said multiplexed, in scalable video compression encoded, television channel bit-streams to a lower level of said network, comprising:
- a demultiplexer of said multiplexed, in scalable video compression encoded, television channel bit-streams into different in scalable video compression encoded, television channel bit-streams,
- encoded video layer extractors, able to select with respect to a television channel, different layers of said in scalable video compression encoded, television channel bit-streams,
- a statistical multiplexer controller for controlling said encoded video layer extractors to truncate selected layers of associated in scalable video compression encoded, television channel bit-streams obtaining truncated, in scalable video compression encoded, television bit-streams, in order to adapt the output bit-rate to the allowable bandwidth of the lower level of the network,
- a multiplexer of said truncated, in scalable video compression encoded, television channel bit-streams, into multiplexed, in scalable video compression encoded, television channel bit-streams.

In a first preferred embodiment, the statistical multiplexer controller of the multicast router according to the present invention respects a fairness criterion.

In a second preferred embodiment, the statistical multiplexer controller respects a smoothness criterion.

In a further aspect of the present invention, this object is solve by a multicast system of a content distribution system adapted on the one hand, for receiving from a server of a network, multiplexed, in scalable video compression encoded, television channel bit-streams and adapted on the other hand, to multicast said multiplexed, in scalable video compression encoded, television channel bit-streams, to a lower level of said network and comprising at least two cascaded multicast routers according to the invention.

In a further aspect of the present invention, this object is solve by a network of a content distribution system **characterized in that** it comprises a multicast source level comprising at least one server, a reception level comprising at least a receiver, and at least one intermediate multicast level comprising at least one multicast router according to the invention.

Advantageously, the network of a content distribution system according the invention comprises at least two intermediate multicast levels with respective multicast routers in cascade.

Preferably, the network of a content distribution system according the invention, for delivering wireless video, is **characterized in that** said server comprises on the one hand, a plurality of encoders with respect to associated television channels, to encode in scalable video compression encoded, television channel bit-streams, and provide a plurality of in scalable video compression encoded television channel bit-streams and on the other hand, a multiplexer, of said in scalable video compression encoded, television channel bit-streams, into multiplexed, in scalable video compression encoded, television channel bit-streams.

Advantageously, the network according the invention is **characterised in that** it comprises a single multicast source.

In a last aspect of the present invention, this object is solve by a method of multicasting contents in a content distribution system from an upper level of a network to a lower level of said network, comprising the steps of:
- demultiplexing multiplexed, in scalable video compression encoded, television channel bit-streams into different, in scalable video compression encoded, television channel bit-streams,
- selecting different layers of said in scalable video compression encoded, television channel bit-streams,
- truncating selected layers of associated in scalable video compression encoded, television channel bit-streams in order to adapt the output bit-rate to the allowable bandwidth of the lower level of the network,
- multiplexing the truncated, in scalable video compression encoded, television channel bit-streams.

Other features and advantages of the invention will become apparent from the following drawings and description.

For a better understanding of the invention with regard to the embodiments thereof, reference is made to the accompanying drawings, in which like numerals designate corresponding elements or sections throughout (from 1 to 38 for devices and upper 100 for the method), and in which:
- Figure 1 is a schematic illustration of a network comprising a multicast router according to a first embodiment of the invention,
- Figure 2 is a schematic illustration of the multicast router of the figure 1,
- Figure 3 is a schematic illustration of a second embodiment of the network,
- Figure 4 is a schematic illustration of a method according the invention and,
- Figure 5 is a schematic illustration of a third embodiment of the network.

As used herein, the term "network" refers generally to any type of telecommunications or data network. Such network or portions thereof may utilize any one or more different transmission media (e.g., wired/RF cable, RF wireless) and/or communications or networking protocols (e.g., SONET, DOCSIS, IEEE Std. 802.3, 802.11, 802.15, 802.16 (WiMAX), ATM, X.25, Frame Relay, 3GPP, 3GPP2, WAP, SIP, UDP, FTP, RTP/RTCP, IL323, etc.).

As used herein, the term "content" refers to audio, video, graphics files (in uncompressed or compressed format), icons, software, text files and scripts, data, binary files and other computer-usable data used to operate a client device and produce desired audio-visual effects on a client device for the viewer.

As used herein, the term "statistical" refers without limitation to any process, component or analytical framework based at least in part on one or more statistical, random or deterministic parameters.

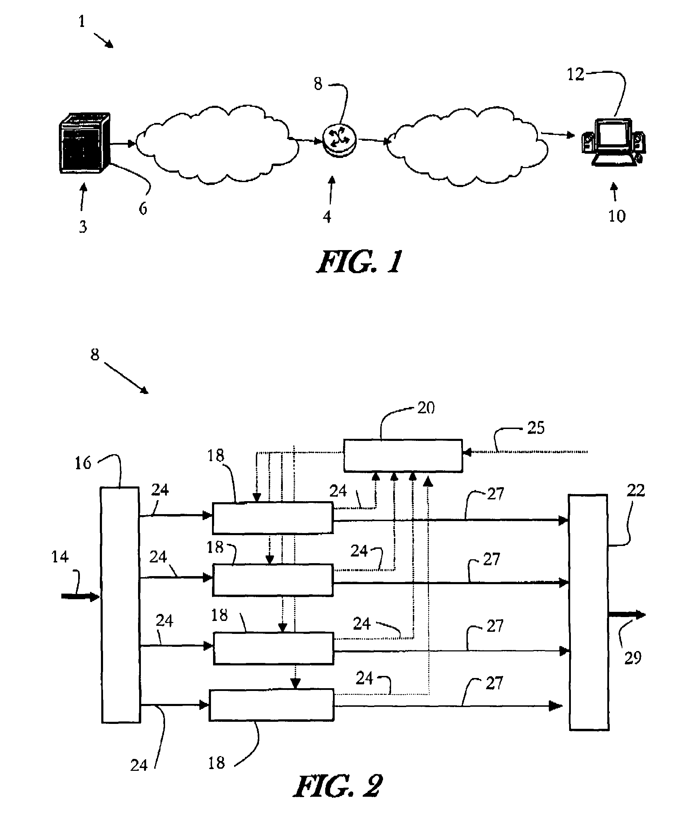

According to a first embodiment of the invention shown in figure 1, the network 1 of a content distribution system comprises multicast source 3 comprising at least one server 6, a reception level 10 comprising at least a receiver 12, and at least one intermediate multicast level 4 comprising at least one multicast router 8.

Receivers 12, such as end-users terminal devices, fixed or mobiles have access to digital television content via a satellite, cable, or terrestrial network, located within a consumer's or user's premises and connected to the network 1. The terminal device functionality may be integrated into a digital television (DTV) set.

The server 6 refers to any computerized component, system or entity regardless of form, which is adapted to provide data, files, applications, content, or other services to one or more other devices or entities on a computer network.

In a preferred embodiment, the server 6 of the network 1 comprises a single multicast source and may be adapted to deliver wireless video.

The server 6 advantageously comprises a plurality of encoders (not visible) with respect to associated television channels, to encode, in scalable video compression encoded, television channel bit-streams and provide a plurality of, in scalable video compression encoded television channel bit-streams.

The server 6 also comprises a multiplexer of said in scalable video compression encoded, television channel bit-streams, into multiplexed, in scalable video compression encoded, television channel bit-streams.

Scalable (or layered) video compression is the encoding of a single video stream in different layers, each layer being encoded with its own bit rate and further increasing the video quality.

The multicast router 8 is adapted on the one hand, for receiving from an upper level of the network 1 (here the server 6) multiplexed, in scalable video compression encoded, television channel bit-streams 14 and on the other hand, adapted to multicast said multiplexed, in scalable video compression encoded, television channel bit-streams 14 to a lower level of said network 1.

More in details and referring now to figure 2, the multicast router 8 comprises a demultiplexer 16, a plurality of encoded video layer extractors 18, a statistical multiplexer controller 20 and a multiplexer 22.

The demultiplexer 16, is able to demultiplex the multiplexed, in scalable video compression encoded, television channel bit-streams 14, received from the upper level, into different, four in this example, in scalable video compression encoded, television channel bit-streams 24.

The multicast router 8 comprises an encoded video layer extractor 18 for each television channel 24, so it comprises fours encoded video layer extractors 18 in this example.

The encoded video layer extractors 18 are able to select with respect to a television channel, different layers of said in salable video compression encoded, television channel bit-streams 24.

The statistical multiplexer controller 20 can receive an information about the total output allowable bandwidth 25 of a lower level 10 of the network 1, necessary for multicast all television channels, and information about the in scalable video compression encoded, television channel bit-streams 24.

With theses both information, the statistical multiplexer controller 20 can share the allocated bit-rate for each in scalable video compression encoded, television channel bit-streams 24, in order to adapt the output bit-rate to the allowable bandwidth 25 of the lower level of the network 1.

For doing that, the statistical multiplexer controller 20 can control each encoded video layer extractors 18 to truncate selected layers of each associated in scalable video compression encoded, television channel bit-streams 24.

The layer extractors 18 truncate in salable video compression encoded, television channel bit-streams 24 into truncated in scalable video compression encoded, television channel bit-streams 27, each sharing the allocated total output bit-rate.

The multiplexer 22 is able to multiplex truncated in scalable video compression encoded, television channel bit-streams 27, for each television channel, into multiplexed, in scalable video compression encoded, television channel bit-streams 29.

Thus, classical encoders are replaced by scalable extractors 18, which are able to drop and cut off video packets to dynamically adapt rate and distortion-quality and the transcoding stage of conventional statistical multiplexer is replaced by a simple layer filtering, selecting the exact number of layers.

The multicast router 8 allows that the video bit-rate fit on closer to the output available bandwidth 25 bypassing the classical stage of transcoding (decoding and re-encoding or re-quantization of the video streams).

Moreover, the video bit-rate allocation can also depend on each TV channel complexity (motions, still textures).

Preferably, the statistical multiplexer controller 20 respects a fairness criterion for all television channel.

The fairness criterion computes the bit-rates allocated to the different television channels and states that all received program should have similar video qualities.

Preferably, the statistical multiplexer controller 20 respects a smoothness criterion for each television channel, stating that each received program should have stable visual quality expressed in peak signal to noise ratio (PSNR).

Thus, decoded video quality at receivers 12 is maximized and quality variations are smoothed.

According to a further embodiment of the invention, the network 1 comprises at least two intermediate multicast levels with respective multicast routers 8 in cascade.

At least two intermediate multicast levels 4 with respective multicast routers 8 in cascade are forming a multicast system 31 of a content distribution system of the network 1.

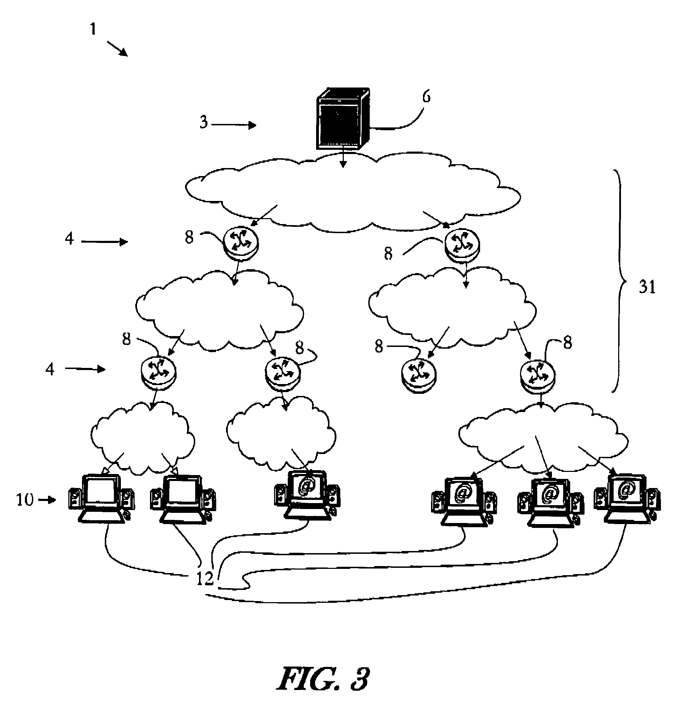

Figure 3 illustrates this embodiment showing a network 1, for example such as a multicast tree, comprising a multicast source level 3 comprising a server 6, two intermediate multicast levels 4 and delivering content to a reception level 10, comprising in this example six receivers 12, such as end-users terminal devices, fixed or mobiles.

The two intermediate multicast levels 4 forming a multicast system 31.

The multicast system 31 is adapted on the one hand, for receiving from a server of a network 1, multiplexed, in scalable video compression encoded, television channel bit-streams and adapted on the other hand, to multicast said multiplexed, in scalable video compression encoded, television channel bit-streams, to a lower level of said network 1.

In each segment of the multicast tree, allowable bandwidth 25 can he different.

When cascading the multicast router 8, the media delivery for a subset or group of end-users from a subset of the network 1 or a geographical zone is optimized and costs are reduced.

Thus, cascading multicast routers 8 enable to optimize the bit-rate at each node of a multicast tree, depending on each network segment characreristics and capacities.

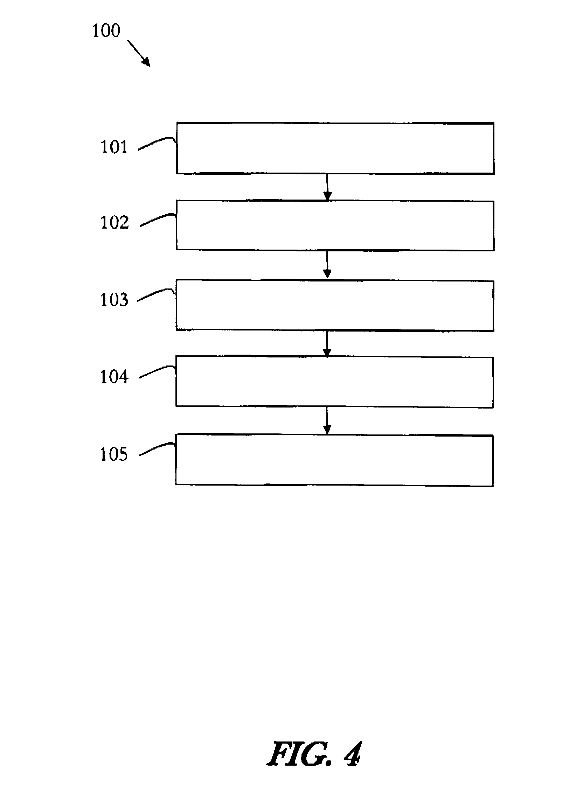

In functioning, and referring to the figure 4, the method of multicasting contents in a content distribution system from an upper level of a network 1 to a lower level of said network 1, comprises the following steps.

In a first step (101), demultiplexing multiplexed, in scalable video compression encoded, television channel bit-streams into different, in scalable video compression encoded, television channel bit-streams.

In a second step (102), selecting different layers of said in scalable video compression encoded, television channel bit-streams.

Then in a third step (103), truncating selected layers of associated in scalable video compression encoded, television channel bit-streams in order to adapt the output bit-rate to the allowable bandwidth of the lower level of the network.

In a last step (104), multiplexing the truncated, in scalable video compression encoded, television channel bit-streams.

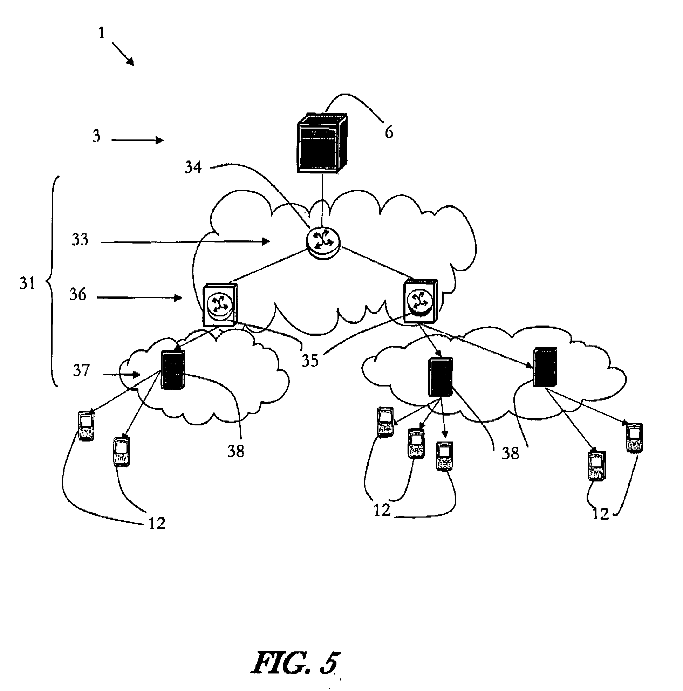

According to a particular embodiment illustrated by the figure 5, the network 1 delivers wireless video, and comprises multicast source level 3 of transmission comprising a server 6, and a multicast system 31.

This server 6, preferably such as a broadcast multicast server controller, divers television channel hit-streams and a plurality of encoders associated with each television channel, to encode it in scalable video compression, and provide a plurality of in scalable video compression encoded television channel bit-streams, at a lower level.

The multicast system 31 is the core network, and is adapted for receiving from the multicast source level 3 a multiplexed, in scalable video compression encoded, television channel bit-streams and adapted to multicast said multiplexed, in scalable video compression encoded, television channel bit-streams, to a reception level 10 of said network 1, comprising seven receivers in this example.

According figure 5, the multicast system 31 comprises tree intermediate multicasts levels 33, 36 and 37.

The first intermediate level 33 comprises at least one multicast router 34 such as a GGSN ("Gateway General Packet Radio Service Support Node") transmitting content to at least one multicast router 35 in cascade, such as SGSN ("Serving General Packet Radio Service Support Node") of the second intermediate level 36.

Then, each SGSN nodes 35 could be transmitting content to a lower, third intermediate level 37 in cascade that comprises at least one multicast router 38, such as RNC ("Radio Network Controller") for communication UTRAN/GERAN.

In this lower multicast system 37, the statistical multiplexer controller 20 preferably adapts the output bit-rate to the allowable bandwidth 25 preferably on the air interface.

So, the invention provides a multicast router 8, a multicast system 31, a network 1 and a method comprising, for each television channel, an encoded video layer extractor 18, able to select different layers of said in scalable video compression encoded, television channel bit-streams 24, and a statistical multiplexer controller 20 for controlling each encoded video layer extractors 18 to truncate selected layers of each associated in scalable video compression encoded, television channel bit-streams 24 in order to adapt the output bit-rate to the allowable bandwidth 25 of the lower level 10 of the network 1, enahling costs and transmission time reductions.

## Claims

1. Multicast router (8) of a content distribution system adapted on the one hand, for receiving from an upper level of a network (1) multiplexed, in scalable video compression encoded, television channel bit-streams (14) and on the other hand, adapted to multicast said multiplexed, in scalable video compression encoded, television channel bit-streams (14) tu a lower level of said network (1), comprising:
- a demultiplexer (16) of said multiplexer, in scalable video compression encoded, television channel bit-streams (14) into different in scalable video compression encoded, television channel bit-streams (24),
- encoded video layer extractors (18), able to select with respect to a television channel, different layers of said in scalable video compression encoded, television channel bit-streams (24),
- a statistical multiplexer controller (20) for controlling said encoded video layer extractors (18) to truncate selected layers of associated in scalable video compression encoded, television channel bit-streams (24) obtaining truncated, in scalable video compression encoded, television bit-streams (27), in order to adapt the output bit-rate to the allowable bandwidth (25) of the lower level of the network (1),
- a multiplexer (22) of said truncated, in scalable video compression encoded, television channel bit-streams (27), into multiplexed, in scalable video compression encoded, television channel bit-streams (29).

2. Multicast router according to claim 1, **characterized in that** the statistical multiplexer controller (20) respects a fairness criterion

3. Multicast router according to any one of claim 1 or 2, **characterized in that** the statistical multiplexer controller (20)respects a smoothness criterion.

4. Multicast system (31) of a content distribution system adapted on the one hand, for receiving from a server (6) of a network (1), multiplexed, in scalable video compression encoded, television channel bit-streams (14) and adapted on the other hand, to multicast said multiplexed, in scalable video compression encoded, television channel bit-streams (14), to a lower level of said network (1) and comprising at least two cascaded multicast routers (8) according to any one of the previous claims.

5. Network (1) of a content distribution system **characterized in that** it comprises a multicast source level (3) comprising al least one server (6), a reception level (10) comprising at least a receiver (12), and at least one intermediate multicast level (4) comprising at least one multicast router (8) according to any one of claims 1 to 3.

6. Network (1) of a content distribution system according to claim 5, **characterized in that** it comprises at least two intermediate multicast levels (33; 36; 37) with respective multicast routers (34; 35; 38) in cascade.

7. Network (1) of a content distribution system according to any one of claim 5 or 6, for delivering wireless video, **characterized in that** said server (6) comprises on the one hand, a plurality of encoders with respect to associated television channels, to encode in scalable video compression encoded, television channel bit-streams, and provide a plurality of in scalable video compression encoded television channel bit-streams and on the other hand, a multiplexer, of said in scalable video compression encoded, television channel bit-streams, into multiplexed, in scalable video compression encoded, television channel bit-streams.

8. Network (1) according to any one of claims 5 to 7, **characterized in that** it comprises a single multicast source.

9. Method of multicasting contents in a content distribution system from an upper level of a network (1) to a lower level of said network (1), comprising the steps of:
- demultiplexing (101) multiplexed, in scalable video compression encoded, television channel bit-streams (14) into different, in scalable video compression encoded, television channel bit-streams (24),
- selecting (102) different layers of said in scalable video compression encoded, television channel bit-streams (24),
- truncating (103) selected layers of associated in scalable video compression encoded, television channel bit-streams (24) in order to adapt the output bit-rate to the allowable bandwidth (25) of the lower level of the network (1),
- multiplexing (104) the truncated, in scalable video compression encoded, television channel bit-streams (27).
